# FASCICULE DE BREVET EUROPEEN

(11) **EP 0 332 520 B1**
(45) Date de publication et mention de la délivrance du brevet: **17.05.1995**
(21) Numéro de dépôt: 89400616.2
(22) Date de dépôt: 06.03.1989
(51) Int. Cl.: G11B 5/53

(54) **Enregistreur à tête tournante pourvu d'un dispositif de couplage électrique rotatif**
Aufnahmegerät mit drehendem Kopf und mit einer drehbaren elektrischen Kopplungsvorrichtung
Rotating head recorder provided with a rotatable electrical coupling device

(30) Priorité: 07.03.1988 FR 8802861
(43) Date de publication de la demande: 13.09.1989
(73) Titulaire: SCHLUMBERGER INDUSTRIES, F-92120 Montrouge (FR)
(72) Inventeur: Lelandais, Guy, F-91190 Gif-sur-Yvette (FR)
(74) Mandataire: Dupont, Henri

(56) Documents cités:
- EP-A- 0 180 852
- FR-A- 1 191 485
- US-A- 2 602 118

## Description

La présente invention concerne un enregistreur à tête tournante, pourvu d'un dispositif de couplage électrique rotatif.

On sait que tels enregistreurs comprennent une ou plusieurs têtes magnétiques d'enregistrement/lecture, fixées sur la périphérie d'un élément de révolution, coaxial à l'axe d'un tambour cylindrique contre la surface duquel est enroulée hélicoïdalement une bande magnétique défilant entre une bobine émettrice et une bobine réceptrice. Les informations sont enregistrées sur la bande selon des pistes obliques dont l'inclinaison est fonction du rapport des vitesses respectives de la bande et de la tête. Les enregistreurs de ce type comprennent deux familles. Dans la première famille, les têtes sont fixées sur la périphérie d'un plateau tournant, coaxial au tambour, et disposé dans une fente prévue dans un plan équatorial du tambour; devant la fente défile ladite bande magnétique enroulée hélicoïdalement sur le tambour. Dans l'autre famille, le tambour comprend une partie inférieure fixe et une partie supérieure tournante à la base de laquelle les têtes sont fixées.

Afin de véhiculer les informations entre les têtes tournantes et les moyens (fixes) associés à l'enregistreur et destinés à traiter ou émettre ces informations (respectivement pour la lecture ou l'enregistrement), il est prévu, pour chaque tête, un dispositif de couplage électrique rotatif entre la partie fixe et les parties tournantes (plateau porte-tête) de l'enregistreur.

De façon connue, le dispositif de couplage est constitué, pour chaque tête, d'un transformateur tournant comprenant un rotor (associé au plateau porte-tête) et un stator (fixe), tous deux cylindriques ou annulaires; le rotor et le stator sont pourvus chacun, dans leur face en regard d'une gorge dans laquelle est disposé un bobinage de fil conducteur, constituant respectivement le primaire (stator) et le secondaire (rotor). Le document EP-A-0180852 décrit un tel enregistreur pourvu d'un dispositif de couplage rotatif inductif.

Un tel dispositif connu présente des inconvénients.

La mise en place du bobinage à l'intérieur des gorges respectives du stator et du rotor est complexe et délicate, eu égard aux faibles dimensions de celles-ci et au faible diamètre du fil conducteur utilisé. La structure réalisée doit présenter sur le plan mécanique des tolérances réduites, tout écart avec la côte exacte affectant la transmission du signal.

Par ailleurs, les enregistreurs de ce type doivent pouvoir enregistrer et lire des données à des cadences de flux de données pouvant varier dans un rapport élevé (jusqu'à 25 par exemple), alors que le format et l'inclinaison des pistes sur la bande est fixe (imposé par une norme, par exemple). Des cadences différentes impliquent des vitesses relatives tête-bande différentes qui doivent, en conséquence, varier elles aussi dans une large plage.

Ceci requiert une bande de fréquence étendue des signaux.

Or, les transformateurs tournants connus entrainent une limitation de cette bande de fréquence.

En effet, les phénomènes de résonance du circuit équivalent constitué par l'impédance de fuite et l'impédance de la tête en paralléle sur les différentes capacités parasites, affectent la limite supérieure de la bande de fréquence. Par ailleurs, le circuit constitué de la résistance de sortie de l'amplificateur relié au transformateur et de l'inductance propre du transformateur, présente (compte-tenu de la valeur de cette dernière) une fréquence de coupure basse affectant la limite inférieure de la bande de fréquence.

On sait que la bande passante de fréquence est d'autant plus large que le rapport impédance propre sur impédance de fuite (du transformateur) est grand.

A titre illustratif, la gamme de fréquence obtenue par les transformateurs connus est au mieux de l'ordre de 100 KHz à 30 (ou 40) MHz. Cette gamme n'est pas suffisamment étendue pour satisfaire les besoins, compte tenu de la gamme possible des vitesses pour lesquelles une gamme de fréquence de 3 KHz - 200 MHz (à - 3 dB) serait nécessaire.

En outre, l'impédance de transfert du transformateur est difficile à maîtriser, sur la plage de fréquence requise, notamment à cause de la ferrite utilisée pour réaliser le transformateur et dont les caractéristiques sont difficiles à contrôler.

Enfin, on sait que, dans le but de vérifier les opérations d'écriture, une opération de lecture avec correction d'erreur est effectuée, juste après l'opération d'enregistrement. Or, les niveaux des signaux respectifs liés à ces deux opérations sont différents ; en effet, l'enregistrement nécessite des signaux de niveau élevé, tandis que la lecture ne délivre que des signaux de faible niveau. Ainsi, la dynamique de transmission de tels transformateurs doit être élevée, ce qui augmente les difficultés.

De façon connue, on a tenté de résoudre, ou du moins d'atténuer, ces difficultés, liées à l'utilisation de transformateurs tournants, à l'aide de circuits annexes.

Selon une première solution connue, la vitesse relative tête/bande est fixe et l'enregistreur comprend une mémoire tampon contenant une quantité de données variable en fonction du temps et liée aux fluctuations de la valeur du flux d'informations.

Cette disposition, si elle permet de réduire la gamme de fréquence à une étendue compatible avec les limites de la bande de fréquence propres aux transformateurs tournants connus (comme indiqué précédemment), ne résoud en rien les difficultés liées aux différences de niveaux entre l'enregistrement et la lecture (mentionnées ci-dessus). En outre, cette disposition complique la structure de l'enregistreur par la présence additionnelle de la mémoire tampon dont la contenance doit être d'autant plus grande que la plage de variations dans le temps du flux de données est grande.

Une seconde solution connue consiste à placer sur le plateau porte-tête, pour chaque tête, un circuit électronique d'amplification ; chaque circuit est disposé entre la tête et le transformateur tournant associé à cette dernière. On obtient des signaux respectifs d'enregistrement/lecture de niveaux cohérents, car il est ainsi possible de réduire le niveau nécessaire à l'enregistrement et d'augmenter le niveau des signaux à la lecture; la cohérence des niveaux entraîne une réduction de la diaphonie. De plus, la bande passante obtenue est élargie; en effet, la tête magnétique est séparée du coupleur imparfait constitué par le transformateur tournant ; il est donc possible de donner à l'inductance propre du transformateur un valeur telle que le rapport impédance propre sur impédance de fuite du transformateur soit augmenté ; en toute hypothèse, ce rapport a une influence moins déterminante (par la présence du circuit d'amplification sur le plateau) que dans les autres solutions connues (sans circuit d'amplification sur le plateau).

Cependant, les possibilités d'augmenter ce rapport sont limitées. Ce dispositif connu conduit donc à une bande de fréquence qui, bien qu'élargie, présente néanmoins des bornes inférieure et supérieure bien en-de a des besoins.

Ainsi, on comprend que ces deux solutions connues ne résolvent que très partiellement les problèmes évoqués précédemment.

De plus, ni l'une ni l'autre n'échappent au défaut de complexité de réalisation d'un transformateur, puisque par hypothèse faisant appel à ce dernier.

Les documents US-A-2 602 118 et FR-A-1 191 485 décrivent tous deux un dispositif de couplage électrique rotatif capacitif utilisé dans des systèmes d'antennes tournantes. Aucun de ces deux documents ne divulguent l'emploi de tel coupleurs capacitifs dans un lecteur/enregistreur à tête tournante.

La présente invention remédie à ces inconvénients, et propose un dispositif de couplage simple à réaliser, qui autorise une bande de fréquence large, et s'affranchit des différences de niveaux des signaux entre l'enregistrement et la lecture.

A cette fin, selon l'invention, l'enregistreur/lecteur magnétique à bande, comprenant au moins une tête magnétique animée d'un mouvement de rotation à la périphérie d'une fente équatoriale d'un tambour cylindrique sur la surface duquel la bande est enroulée hélicoïdalement et un dispositif de couplage électrique rotatif, ledit dispositif étant destiné à transmettre des signaux électriques représentatifs d'informations enregistrées/lues sur la bande, entre une partie rotative liée à la tête formant rotor et une partie fixe formant stator liée à des moyens électroniques respectivement d'émission et/ou réception de ces informations, est caractérisé en ce qu'il comprend, pour chaque tête, un condensateur ne comportant que deux armatures conductrices concentriques et de forme cylindrique disposées l'une en regard de l'autre et solidaires respectivement l'une du rotor, l'autre du stator.

On définit ainsi une armature émettrice et une armature réceptrice du signal à transmettre.

Selon une forme de réalisation préférée, chaque armature est solidaire d'un corps formant support de forme générale annulaire, en matériau isolant.

Avantageusement, les armatures sont disposées sur le corps support par métallisation.

De préférence, chaque corps présente une section en forme générale de U, dont les bases sont coplanaires et transversales au rotor, les armatures conductrices étant rapportées sur les faces extérieures respectives des branches en regard dudit corps.

Avantageusement, la hauteur des armatures est inférieure à la hauteur de chaque corps, de manière à ménager de part et d'autre de l'armature une bande libre du corps, augmentant ainsi la distance séparant l'armature des parties métalliques disposées à proximité.

Afin de réduire les perturbations de transmission dues aux capacités parasites entre les armatures et la masse d'une part, et les armatures de deux condensateurs voisins (décalés axialement sur le rotor) d'autre part, il est prévu, pour chaque condensateur de couplage, deux anneaux de blindage métalliques, de section en forme générale de L, dont une branche est disposée transversalement au rotor et rapportée à la base des parties respectivement tournante et fixe du condensateur.

De préférence, une meilleure isolation est obtenue grâce à des anneaux de blindage pourvus chacun d'un retour plaqué contre la face de chaque corps portant l'armature correspondante.

L'armature réceptrice de chaque condensateur est reliée à un circuit récepteur comprenant un élément à grande impédance d'entrée, tel qu'un transistor à effet de champ.

Afin que la fréquence de coupure basse du circuit haute impédance associé au condensateur soit la plus faible possible (pour ne pas affecter la limite inférieure de la gamme de fréquence), le circuit récepteur comprend en outre une impédance de valeur élevée comparée à la somme de la capacité du condensateur de couplage et de la capacité d'entrée du circuit récepteur.

Pour éviter les conséquences de l'influence de l'environnement sur cette forte impédance, celle-ci est constituée de plusieurs impédances disposées selon un montage du type dit "boot-strap".

De manière avantageuse, le circuit récepteur est disposé à proximité de l'armature réceptrice.

Le dispositif selon l'invention est suceptible de s'appliquer à un enregistreur/lecteur comprenant deux séries de têtes magnétiques, l'une pour l'enregistrement, l'autre pour la lecture. Dans ce cas, les condensateurs de couplage sont également séparés en deux groupes, l'un pour l'enregistrement, l'autre pour la lecture. Pour un condensateur de couplage pour l'enregistrement, l'armature émettrice est l'armature fixe tandis que l'armature réceptrice est l'armature tournante. La correspondance est inverse pour un condensateur de couplage pour la lecture.

Plus précisément, pour un condensateur de couplage lié à une tête d'enregistrement, (dans ce cas, l'armature réceptrice est l'armature tournante), le circuit récepteur est disposé sur la partie du condensateur liée au moyeu solidaire du plateau porte-têtes et formant rotor, et de préférence sur la face supérieure du corps annulaire formant la partie tournante du condensateur.

Avantageusement, l'armature émettrice est reliée à un circuit émetteur, comprenant un transistor à faible impédance de sortie.

De préférence, le dispositif comporte des moyens de retour de masse, fonctionnant en mode différentiel et pourvus de moyens de couplage rotatifs additionnels, associés à des moyens aptes à délivrer, aux bornes desdits moyens de couplage additionnels, un courant de sens inverse de celui traversant chacun des condensateur de couplage transmettant les signaux d'informations.

Plus précisément, les moyens de retour de masse comprennent un condensateur supplémentaire dont une armature est reliée à la sortie d'un premier amplificateur dont l'entrée est reliée à la sortie d'un premier circuit sommateur/inverseur reçevant les courants relatifs à chacun des signaux issus respectivement des circuits émetteurs (propres aux condensateurs d'enregistrement); l'autre armature dudit condensateur supplémentaire est reliée à la sortie d'un second amplificateur dont l'entrée est reliée à la sortie d'un second circuit sommateur/inverseur recevant les courants relatifs à chacun des signaux issus respectivement des circuits récepteurs (propres aux condensateurs de lecture).

Il est entendu par circuit sommateur/inverseur un circuit délivrant un signal de sortie correspondant à la somme des signaux d'entrées affectée du signe moins.

L'invention concerne également un enregistreur/lecteur à tête tournante pourvu d'un dispositif de couplage du type décrit dans la présente demande.

L'invention sera bien comprise à la lumière de la description qui suit, se référant au dessin annexé dans lequel:
- La figure 1 est un schéma en perspective d'un enregistreur/lecteur du type auquel s'applique l'invention.
- La figure 2 est une vue de dessus du dispositif de la figure 1;
- La figure 3 est une vue partielle en coupe du tambour et des organes électroniques et mécaniques associés;
- La figure 4 est un schéma montrant de côté les liaisons rotor-stator, et le plateau en perspective;
- La figure 5 est une vue schématique en perspective de deux condensateurs de couplage respectivement pour l'enregistrement et la lecture;
- La figure 6A est un schéma en coupe de deux condensateurs de couplage selon l'invention;
- la figure 6B est une vue en coupe de deux anneaux de blindage d'un condensateur ;
- Les figures 7 et 8 sont des schémas électroniques montrant les circuits reliant le stator et une tête, respectivement de lecture et d'enregistrement;
- La figure 9 est un schéma d'une forme de réalisation de moyens de retour de masse selon l'invention.

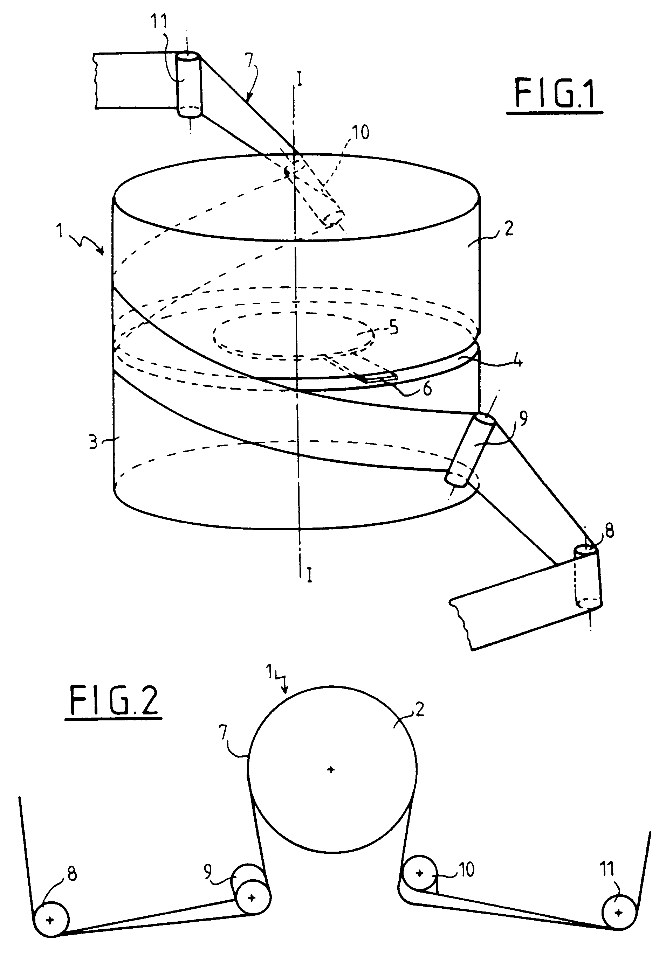

Le dispositif de la présente invention est décrit ci-après en relation avec un exemple d'application au domaine des appareils d'enregistrement/lecture à têtes magnétiques tournantes, du type connu en soi et tels que représenté schématiquement sur les figures 1 et 2.

L'enregistreur/lecteur comporte un tambour cylindrique 1 qui se décompose en tambour supérieur 2 et tambour inférieur 3, séparés par une fente 4 disposée dans un plan équatorial perpendiculaire à l'axe I-I du tambour et sensiblement à mi-hauteur de ce dernier.

Dans cette fente, est prévu un élément en forme de disque 5, susceptible d'être animé d'un mouvement rotatif autour de l'axe I-I du tambour. Le disque est porteur d'une, et généralement de plusieurs, têtes magnétiques 6 disposées régulièrement sur sa périphérie et faisant très légèrement saillie par rapport à la surface définissant la paroi du tambour.

Une bande magnétique 7 est susceptible de s'enrouler hélicoïdalement autour du tambour 1 pour former, en vue de dessus comme montré sur la figure 2, un oméga. Un ensemble de galets 8 à 11 guident la bande 7 et la maintiennent selon cette configuration pendant son défilement, depuis une bobine débitrice vers une bobine réceptrice (non représentées et connues en elles-mêmes). Les informations sont enregistrées/lues sur la bande selon des segments de pistes parallèles et obliques par rapport à l'axe de la bande.

Il est entendu que l'invention s'applique également à des enregistreurs/lecteurs du type dans lesquels les têtes sont fixées sur la périphérie de la base d'un tambour supérieur tournant, coaxial à un tambour inférieur fixe, la bande défilant devant la fente définie entre les deux tambours.

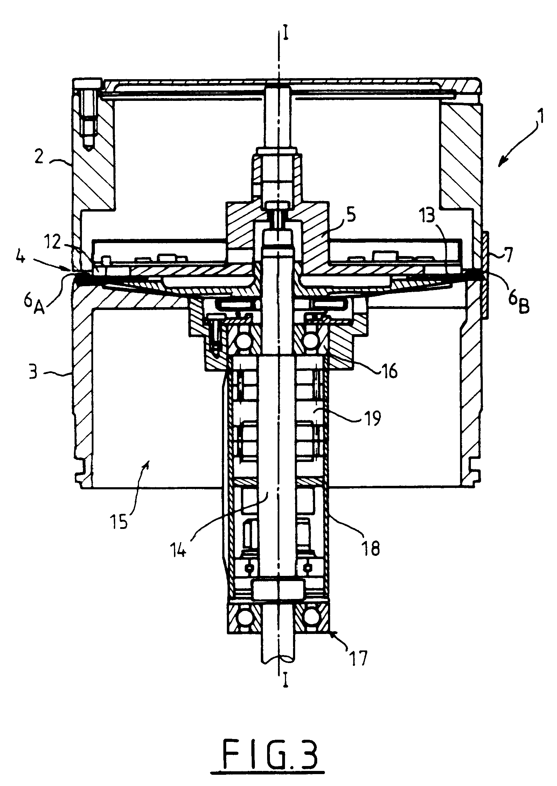

Sur la figure 3 sont représentés, en coupe, le tambour et les organes mécaniques y associés d'un enregistreur à têtes tournantes, dans laquelle les éléments similaires à ceux des figures 1 et 2 portent la même référence d'une figure à l'autre.

Le disque ou plateau 5 comprend sur sa périphérie des languettes radiales 12, 13 à l'extrémité de chacune desquelles est fixée une tête magnétique 6A, 6B. Le disque est solidaire d'un moyeu 14 coaxial avec l'axe I-I du tambour 1 et monté à rotation sur le stator 15 ; ledit moyeu 14 (formant rotor) est lié au tambour par l'intermédiaire de roulements à billes (connus en soi) respectivement supérieur 16 et inférieur 17.

A l'intérieur 3 du tambour inférieur est prévue une chemise cylindrique 18, coaxiale au moyeu 14, et disposée entre les roulements 16 et 17. Cette chemise, de diamètre supérieur à celui du moyeu, définit une chambre cylindrique 19 où sont logés des organes de couplage électrique tournants (objets de l'invention), destinés à assurer la liaison entre les têtes magnétiques liées au rotor et les moyens électroniques (non représentés sur les figures 1 et 2), respectivement émetteurs et récepteurs des informations, et liés au stator.

A titre illustratif, l'enregistreur/lecteur magnétique peut être disposé à bord d'un aéronef et reçoit les informations provenant de capteurs et/ou d'organes de contrôle et/ou de commande dudit aéronef. Ces informations sont ainsi stockées sur bande magnétique pour être généralement lues et exploitées ultérieurement.

Lors de l'enregistrement, lesdits moyens émetteurs émettent des informations à enregistrer sur bande vers les têtes, via les organes de couplage (décrits ci-après); lors de la lecture, les informations sont véhiculées dans l'autre sens, depuis les têtes vers les moyens électroniques aptes à stocker lesdites informations et/ou les adresser vers des moyens d'exploitation.

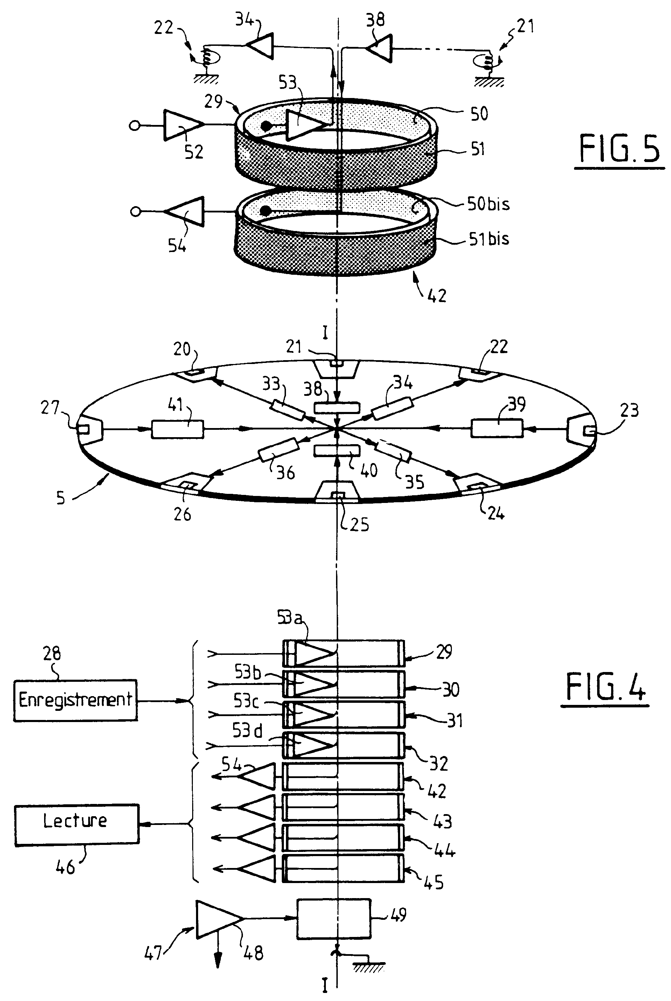

Selon l'invention, les organes de couplage électrique tournants sont constitués d'organes capacitifs, décrits ci-après en liaison avec les figures 4 à 9.

Sur la figure 4 est représenté schématiquement le chemin de circulation des informations au sein d'un enregistreur/lecteur magnétique auquel s'applique l'invention. Sur la périphérie d'un disque rotatif 5 sont disposées huit têtes magnétiques 20 à 27 espacées régulièrement.

Selon l'exemple décrit et représenté, l'enregistreur/lecteur comprend huit têtes dont quatre (20, 22, 24 et 26) sont destinées à l'enregistrement et quatre autres (21, 23, 25 et 27) sont destinées à la lecture.

En effet, on sait que la fiabilité de tels appareils est un élément important; il est donc nécessaire de s'assurer que l'information à été enregistrée correctement, de manière à pouvoir l'exploiter ultérieurement. A cette fin, on effectue juste après l'enregistrement, une lecture de la piste qui vient d'être enregistrée. Ainsi, une téte d'enregistrement est suivie (en terme de position angulaire sur le disque) d'une téte de lecture.

Des moyens 28 émetteurs d'information (connus en eux-mêmes), reliés aux sources d'information à enregistrer, ont leur sortie reliée à des organes de couplage électrique tournants, (en nombre égal au nombre de têtes d'enregistrement), portant les références respectives 29, 30, 31 et 32, et assurant le couplage électrique entre les parties fixes (stator) et les parties tournantes (rotor) ; seul l'axe du rotor est représenté sur la figure 4. La partie tournante de chaque organe de couplage électrique tournant 29, 30, 31 et 32 est reliée aux têtes d'enregistrement 20, 22, 24 et 26, via un circuit électronique d'amplification respectivement 33, 34, 35 et 36, disposés sur le disque 5.

De la même manière, chaque tête de lecture 21, 23, 25 et 27 est reliée par l'intermédiaire de circuits d'amplification respectivement 38, 39, 40 et 41 disposés sur le disque 5, à la partie tournante d'organes de couplage électrique respectivement 42, 43, 44 et 45 ; la partie fixe de ces derniers est reliée à l'entrée de moyens 46 récepteurs des informations lues qui sont ensuite acheminées, soit vers des moyens de stockage ou d'exploitation (non représentés). Lesdits moyens respectivement récepteurs, de stockage sont connus en eux-mêmes.

Ainsi, à chaque tête magnétique correspond un organe de couplage capacitif.

Lesdits organes de couplage sont coaxiaux et disposés à proximité les uns des autres, le long de l'axe du rotor.

Selon l'exemple décrit, il est prévu huit organes de couplage, à savoir quatre pour l'enregistrement et quatre pour la lecture.

Il est également prévu des moyens (connus en soi) d'alimentation 47 en énergie électrique, comprenant une source d'énergie 48 et des organes tournants 49 (connus en soi) destinés à assurer la transmission de l'énergie entre le stator et le rotor.

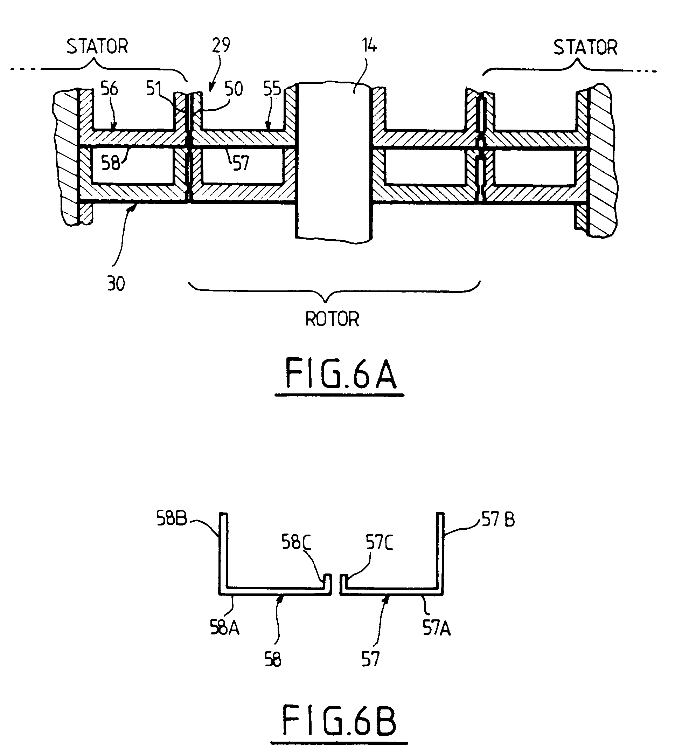

Les organes de couplage capacitif selon l'invention sont décrits plus en détail ci-après, en relation avec les figures 5 et 6.

La figure 5 montre en perspective un organe de couplage d'enregistrement 29 et un organe de couplage de lecture 42. Chaque organe de couplage constitue un condensateur tournant formé de deux armatures cylindriques concentriques, en matériau conducteur et disposées à la même hauteur par rapport à l'axe du rotor; une première armature 50 est liée au rotor, et donc tournante, tandis que la seconde 51, de diamètre légèrement supérieur, est solidaire du stator, donc fixe.

La distance radiale entre la paroi externe de l'armature tournante 50 et la paroi interne de l'armature fixe 51 est, par exemple, de l'ordre de 35 à 60 microns, pour un diamètre d'armature de l'ordre de 15 à 25 mm. La capacité de transfert est de l'ordre de quelques pF à quelques dizaines de pF, typiquement de 10 à 30 pF. Le matériau diélectrique entre armatures d'un même condensateur est l'air ambiant.

Chaque condensateur de couplage comprend une armature d'émission et une armature de réception. Pour un condensateur d'enregistrement, l'armature d'émission est l'armature fixe, et l'armature de réception est l'armature tournante. La correspondance est inverse pour un condensateur de lecture.

Un circuit émetteur 52 (partie des moyens 28 émetteurs) est relié par sa sortie à l'armature fixe 51 du condensateur de couplage 29 pour l'enregistrement, tandis que l'armature tournante 50 est reliée à l'entrée d'un circuit récepteur 53 dont la sortie est connectée (via le rotor) à la tête magnétique 22 par l'intermédiaire du circuit d'amplification correspondant 34 (cf. figure 4). Sont ainsi représentés sur la figure 4 quatre circuits récepteurs 53a, 53b, 53c et 53d pour chacun des condensateurs d'enregistrement.

Inversement, l'armature tournante 50 bis, du condensateur de couplage 42 pour la lecture, est liée directement à la tête 21 via le circuit d'amplification 38, tandis que l'armature fixe 51 bis est reliée à l'entrée d'un circuit récepteur 54 faisant partie des moyens récepteurs (cf. figure 4).

Physiquement, les condensateurs de couplage sont réalisés de la manière décrite ci-après, en liaison avec la figure 6A montrant un exemple avantageux de réalisation de deux condensateurs de couplage 29 et 30 successifs. Il est entendu qu'en pratique, huit condensateurs similaires sont ainsi disposés le long du rotor (selon l'exemple de la figure 4).

Chaque armature métallique 50, 51 du condensateur 29 est montée sur un corps respectivement 55 et 56 en matériau isolant, en forme d'anneau, dont la section est en forme de U. Le premier corps 55 est solidaire, par sa partie de plus petit diamètre, du moyeu 14 du rotor, tandis que sa partie de plus grand diamètre (constituant l'autre branche du U vu en section) porte sur sa face externe l'armature tournante 50. Le second corps 56 (fixe) présente une forme identique à celle du premier corps 55 (tournant), mais est de diamètre supérieur; sa partie de plus petit diamètre (formant une branche du U) porte sur sa face externe l'armature fixe 51 (en regard de l'armature tournante 50), tandis que sa partie de plus grand diamètre (l'autre branche du U) est solidaire du stator. Les corps 55,56 sont respectivement liés au stator et au rotor par de la colle, par exemple. La hauteur des armatures est inférieure à la hauteur du côté du corps correspondant sur lequel celles-ci sont fixées.

Afin de constituer un écran entre deux condensateurs voisins, il est prévu des anneaux de blindage en forme générale de L; ainsi, un premier anneau 57 est rapporté sur la face inférieure (base du U) du premier corps, tandis qu'un second anneau 58 est fixé à la base du second corps 56.

Comme montré sur la figure 6B, les anneaux de blindage 57 et 58 comportent respectivement une branche 57A, 58A placée sur la base du U de chaque corps 55,56, une branche 57B,58B (perpendiculaire) plaquée contre la face extérieure de la branche du U opposée à celle où est fixée l'armature correspondante (50,51). Chaque anneau comprend un retour à l'une de ses extrémités, à savoir celle proche de l'armature correspondante ; les retours 57C et 58C sont plaqués sur la partie inférieure de la face du corps portant les armatures.

Cette forme de réalisation des condensateurs est avantageuse car elle réduit les capacités parasites; en effet, deux armatures respectives, tournantes ou fixes, de deux condensateurs voisins (décalés le long de l'axe du rotor) présentent une surface en regard très faible, sensiblement de l'ordre de leur épaisseur (à savoir de quelques microns).

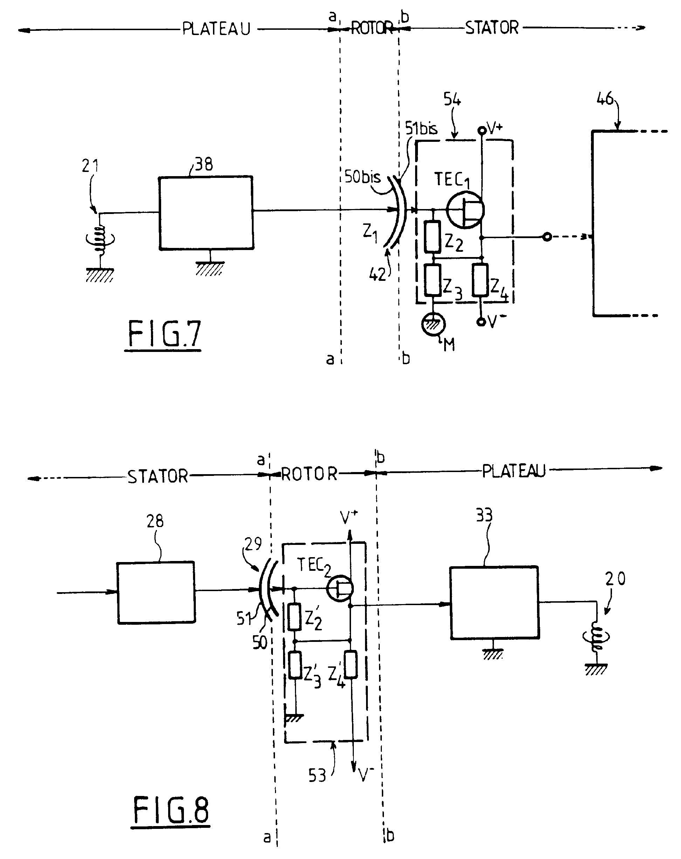

La description qui suit, faite en référence aux figures 7 à 9, révèle le dispositif selon l'invention du point de vue électronique, à savoir les liaisons entre les différents circuits et éléments, ainsi que le contenu des circuits.

La figure 7 représente une vue détaillée, extraite de la figure schématique 4, de l'ensemble de la circuiterie électronique, associée à l'une des têtes magnétiques de lecture. En l'occurence, la tête de lecture 21 est reliée à son circuit d'amplification 38 associé, tous deux disposés sur le plateau tournant 5.

La sortie du circuit 38 (connu en soi) est reliée, par le moyeu 14 du rotor, au condensateur de couplage 42 et plus précisément à l'armature tournante 50 bis, qui constitue ici l'armature réceptrice. L'armature fixe 51 bis, qui constitue ici l'armature émettrice, est reliée aux moyens 46 de lecture (figure 4).

Les lignes de séparation en pointillé respectivement a-a et b-b, indiquent l'emplacement respectif des éléments mentionnés ci-dessus.

Les informations, après avoir été captées par la tête 21, sont amplifiées par le circuit 38, puis transmises du rotor au stator par le condensateur de couplage 42, puis vers les moyens 46 de lecture et de traitement, via le circuit récepteur 54 haute impédance.

Le circuit d'amplification 38 a une faible impédance de sortie, par exemple 10 ohms.

Le circuit récepteur 54 comprend un élément à haute impédance d'entrée, à savoir un transistor à effet de champ TEC1 dont la grille reçoit le signal de l'armature 51 bis et est également reliée à des moyens de retour de masse M via les impédances Z2 et Z3 montées en série; le drain de TEC1 est reliée à une source de tension positive V+; la source de TEC1 est liée d'une part à une source de tension négative V- par une impédance Z4, et d'autre part aux moyens de retour de masse M, via l'impédance Z3.

On entend par moyens de retour de masse M des moyens permettant d'assurer le retour de la masse électrique des circuits tournants vers le stator.

De préférence, les impédances Z2 et Z3 sont des résistances (0,5 Mohms) et l'impédance Z4 un condensateur (dont la capacité vaut quelques nF).

Le montage décrit et représenté des impédances Z2, Z3 et Z4 est avantageux pour la raison suivante.

Compte tenu des faibles valeurs des condensateurs de couplage, à savoir inférieures à 20 pF, il convient, pour obtenir une fréquence de coupure la plus faible possible (affectant la limite inférieure de la bande passante), de prévoir une forte impédance (quelques Mégohms) en dérivation vers la masse entre le condensateur de couplage et le transistor TEC1. Or, une telle impédance (10 Mégohms par exemple) soulèverait des difficultés compte tenu de sa sensibilité aux contraintes d'environnement sévères (condensation, rayonnement, etc.) dans lesquelles fonctionnent les appareils d'enregistrement/lecture magnétiques, auxquels s'applique l'invention.

Cette impédance unique de 10 Megohms est remplacée par le montage équivalent Z2, Z3, Z4 appelé en anglais Boot-strap, et composé d'éléments de faible impédance.

La figure 8 montre en détail l'ensemble de la circuiterie électronique pour l'une des têtes d'enregistrement, en l'occurence la tête 20.

Les moyens 28 émetteurs (cf. figure 4) ont une faible impédance de sortie et sont reliés au condensateur de couplage 29, plus précisément à l'armature fixe 51.

L'armature tournante 50 est reliée au circuit récepteur 53 (cf. figures 4 et 5) lié au rotor; la sortie du circuit 53 est reliée au circuit d'amplification 33 associé à la tête d'enregistrement 20, tous deux montés sur le plateau.

Le circuit récepteur 53 est similaire, dans sa conception et son fonctionnement, au circuit récepteur 54 de la figure 7; il en est de même du circuit amplificateur 33, similaire du circuit amplificateur 38 de la figure 7.

De même, sur la figure 8, les lignes verticales en pointillé respectivement a-a et b-b, associées aux mentions STATOR, ROTOR et PLATEAU, délimitent les emplacements respectifs des circuits.

Ainsi, il est prévu un ensemble de circuits conforme à celui de la figure 7, pour chaque tête de lecture, et à celui de la figure 8 pour chaque tête d'enregistrement.

Les circuits récepteurs, que ce soit pour l'enregistrement ou pour la lecture, sont disposés le plus près possible de l'armature réceptrice correspondante du condensateur de couplage associé. Une ligne trop longue pour transmettre le signal du condensateur au circuit récepteur serait soumise à l'influence d'une part des capacités parasites (entraînant une forte atténuation) et d'autre part des parasites sur la ligne compte tenu de la valeur élevée de l'impédance d'entrée du circuit récepteur par rapport à l'impédance de la ligne.

Avantageusement, les circuits récepteurs 53a, 53b, 53c, 53d associés aux condensateurs d'enregistrement, et donc disposés sur la partie tournante, sont disposés sur le corps support des armatures, et plus précisément sur la face supérieure de la base en U (vue en section; cf. figure 6).

Les circuits récepteurs (tournants 53a, 53b, 53c, 53d) et les circuits amplificateurs disposés sur le plateau sont réalisés selon la technique de montage en surface.

Les circuits émetteurs 52a, 52b, 52c et 52d de l'information transmettent celle-ci via les condensateurs de couplage respectifs 29, 30, 31 et 32, et les circuits récepteurs respectifs 53a, 53b, 53c, et 53d, vers les têtes d'enregistrement 20, 22, 24 et 26.

Inversement, pour ce qui est de la lecture, les têtes de lecture 21, 23, 25 et 27 captent les informations sur la bande; celles-ci sont transmises via les circuits amplificateurs respectifs 38 à 41, et via les condensateurs de couplage 42 à 45 vers les circuits récepteurs 54a, 54b, 54c et 54d, puis vers les moyens de lecture 46.

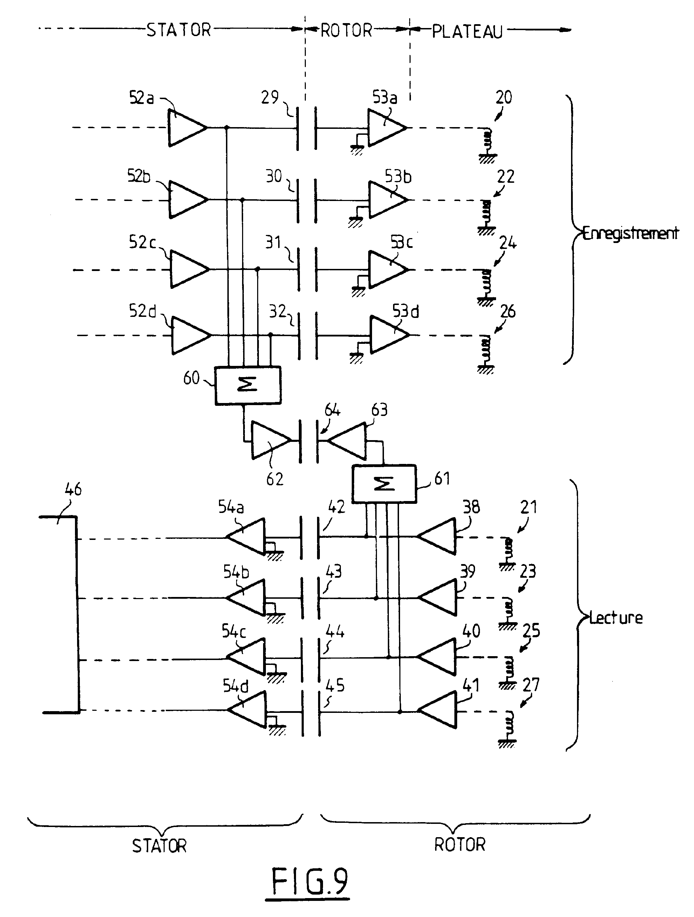

Selon l'invention, le dispositif comprend des moyens de retour de masse décrits ci-après en référence à la figure 9 où les éléments similaires à ceux de la figure 4 portent les mêmes références.

En effet, les circuits décrits précédemment comportent des branchements à la masse, ce qui nécessite un retour de masse commun aux circuits disposés sur les organes rotatifs (plateau et rotor).

Les moyens de retour de masse selon l'invention fonctionnent en mode différentiel et comprennent :
- un premier circuit sommateur/inverseur 60 dont les quatre entrées sont connectées en dérivation entre respectivement chacun des circuits émetteurs 52i (i=a,b,c,d) et chaque condensateur de couplage 29 à 32 d'enregistrement ;
- un second circuit sommateur/inverseur 61 dont les quatre entrées sont connectées en dérivation entre respectivement chacun des condensateurs de couplage 42 à 45 de lecture et les circuits d'amplification 38 à 41;
- un premier amplificateur 62 recevant sur son entrée la sortie du premier circuit sommateur 60, et un second amplificateur 63 recevant sur son entrée la sortie du second circuit sommateur 61;
- un condensateur tournant de couplage supplémentaire 64 (du type de ceux décrits précédemment), dont l'armature fixe est reliée à la sortie du premier amplificateur 62, et dont l'armature tournante est reliée à la sortie du second amplificateur 63.

Les circuits sommateurs 60 et 61 délivrent la somme des signaux d'entrée affectée du signe moins ; par exemple, le sommateur/inverseur 60 reçoit quatre valeurs de courant i₁, i₂, i₃ et i₄, et délivre un signal de sortie de courant -(i₁+i₂+i₃+i₄).

Ainsi, le condensateur de couplage supplémentaire 64, dit condensateur de retour de masse, reçoit sur son armature fixe la somme inversée des courants d'enregistrement provenants des circuits émetteurs, tandis que son armature tournante reçoit la somme inversée de courants de lecture provenant des amplificateurs 38-41 (disposés sur le plateau).

Ainsi, la somme de courants "traversant" les condensateurs de couplage est nulle.

Le condensateur de couplage supplémentaire réalise un mode que l'on pourrait appeler mode pseudo différentiel.

Par ailleurs, de façon optionnelle, est prévu un contact de masse tournant du type mécanique, connu en soi, qui reçoit toutes les masses représentées sur les circuits des figures. ce contact tournant mécanique a pour but d'éviter l'accumulation de charges électriques statiques de fort potentiel sur les parties tournantes de l'enregistreur (rotor, plateau).

Selon une variante de réalisation (non représentée) des moyens de retour de masse, ces derniers comportent les circuits suivants (étant entendu que ces moyens peuvent être également associés à un contact de masse tournant connu en soi mentionné précedemment):
- un premier circuit sommateur/inverseur dont les quatre entrées sont connectées en dérivation entre respectivement chacun des circuits émetteurs 52i (i=a,b,c,d) et chaque condensateur de couplage 29 à 32 d'enregistrement ;
- un second circuit sommateur/inverseur dont les quatre entrées sont connectées à la sortie des circuits récepteurs 54i associés aux condensateurs de lecture ;
- un amplificateur différentiel dont l'entrée négative est liée à la sortie du premier circuit sommateur , et dont l'entrée positive est liée à la sortie du second circuit sommateur ;
- un condensateur tournant de couplage supplémentaire (du type de ceux décrits précédemment), dont l'armature fixe est reliée à la sortie de l'amplificateur différentiel dont l'armature tournante est reliée à un contact de masse commun.

Cette seconde variante permet, à l'instar de la forme de réalisation montrée sur la figure 9 et décrite ci-dessus, de faire en sorte que la somme des courants "traversant" les condensateurs de couplage soit nulle.

## Revendications

1. Enregistreur/lecteur magnétique à bande comprenant au moins un tête magnétique (20-27) animée d'un mouvement de rotation à la périphérie d'une fente équatoriale (4) d'un tambour cylindrique (1), sur la surface duquel défile une bande (7) enroulée hélicoïdalement et un dispositif de couplage électrique rotatif, ledit dispositif étant destiné à transmettre des signaux électriques représentatifs d'informations enregistrées et/ou lues sur la bande (7), entre une partie rotative (29-32) liée à la tête formant rotor et une partie fixe (42-45) formant stator liée à des moyens électroniques respectivement d'émission (28) et/ou réception (46) de ces informations, caractérisé en ce qu'il comprend, pour chaque tête (20-27), un condensateur (29) ne comportant que deux armatures conductrices (50,51), cylindriques et concentriques disposées l'une en regard de l'autre, et solidaires, l'une du rotor, l'autre du stator.

2. Enregistreur/lecteur magnétique à bande selon la revendication 1, caractérisé en ce que chaque armature (50,51) est solidaire d'un corps (55,56) formant support de forme générale annulaire, en matériau isolant.

3. Enregistreur/lecteur magnétique à bande selon la revendication 2, caractérisé en ce que les armatures (50,51) sont disposées sur le corps support (55,56) par métallisation.

4. Enregistreur/lecteur magnétique à bande selon la revendication 2, caractérisé en ce que les corps (55,56) présentent une section en forme générale de U, dont les bases (57,58) sont coplanaires et transversales au rotor, les armatures conductrices (50,51) étant rapportées sur les faces extérieures respectives en regard desdits corps (55,56).

5. Enregistreur/lecteur magnétique à bande selon la revendication 2 ou 3, caractérisé en ce que la hauteur des armatures (50,51) est inférieure à la hauteur desdits corps (55,56).

6. Enregistreur/lecteur magnétique à bande selon l'une des revendications précédentes, caractérisé en ce que l'une des armatures de chaque condensateur est reliée à un circuit récepteur (54) comprenant un élément à grande impédance d'entrée, tel qu'un transistor à effet de champ (TEC1).

7. Enregistreur/lecteur magnétique à bande selon la revendication 6, caractérisé en ce que le circuit récepteur (54) comprend en outre une impédance de valeur élevée comparée à la capacité d'entrée équivalente du transistor à effet de champ (TEC1) à basse fréquence.

8. Enregistreur/lecteur magnétique à bande selon la revendication 7, caractérisé en ce que l'impédance de valeur élevée est constituée de plusieurs impédances (82,83,84) composées d'éléments résistifs et capacitifs et disposées selon un montage équivalent, du type dit "boot-strap".

9. Enregistreur/lecteur magnétique à bande selon l'une des revendications précédentes, comprenant une série de têtes magnétiques (20,22,24,26) pour l'enregistrement et une série de têtes magnétiques (21,23,25,27) pour la lecture, caractérisé en ce que à chaque tête correspond un condensateur de couplage respectivement d'enregistrement (29,30,31,32) et de lecture (42,43,44,45).

10. Enregistreur/lecteur magnétique à bande selon la revendication 9, caractérisé en ce que certaines des armatures mobiles (50) sont reliées à des circuits (53) montés sur le rotor, et en ce que certaines des armatures mobiles (50bis) sont reliées à des circuits (38) montés sur le plateau porte-tête.

11. Enregistreur/lecteur magnétique à bande selon les revendications 2, 6 et 10 caractérisé en ce que ledit circuit (53) monté sur le rotor est un circuit récepteur monté sur la face supérieure du corps annulaire (55) supportant la partie tournante du condensateur (29).

12. Enregistreur/lecteur magnétique à bande selon la revendication 9, caractérisé en ce qu'il est prévu, pour chaque condensateur de couplage, deux anneaux de blindage (57,58) métalliques de section en forme générale de L dont chaque base est disposée transversalement au rotor, et rapportée à la base des parties respectivement tournante et fixe du condensateur.

13. Enregistreur/lecteur magnétique à bande selon les revendications 2 et 12, caractérisé en ce que les anneaux de blindage (57,58) sont pourvus chacun d'un retour plaqué contre la face de chaque corps (55,56) portant l'armature correspondante (50,51).

14. Enregistreur/lecteur magnétique à bande selon l'une des revendications précédentes, caractérisé en ce que l'armature émettrice est reliée à un circuit émetteur, comprenant un élément à faible impédance de sortie, tel qu'un transistor.

15. Enregistreur/lecteur magnétique à bande selon les revendications 6 et 10, caractérisé en ce que les circuits récepteurs reliés aux armatures mobiles respectivement (53a, 53b, 53c, 53d) et les circuits amplificateurs (38,39,40,41) disposés sur le plateau (5), sont réalisés selon la technique de montage en surface.

16. Enregistreur/lecteur magnétique à bande selon l'une des revendications précédentes, caractérisé en ce qu'il comporte des moyens de retour de masse électrique de la partie tournante, comprenant des moyens supplémentaires de couplage tournants (64) rotatifs et des moyens aptes à délivrer, aux bornes desdits moyens de couplage supplémentaires, un courant inverse de celui traversant chacun des condensateurs de couplage transmettant les signaux d'informations.

17. Enregistreur/lecteur magnétique à bande selon les revendications 9 et 16, caractérisé en ce que les moyens de retour de masse comprennent un condensateur tournant supplémentaire (64) dont une armature est reliée à la sortie d'un premier amplificateur (62) dont l'entrée est reliée à la sortie d'un premier circuit sommateur/inverseur (60) reçevant les courants relatifs à chacun des signaux issus respectivement des circuits émetteurs (52a,b,c,d) propres aux condensateurs d'enregistrement, l'autre armature dudit condensateur supplémentaire étant reliée à la sortie d'un second amplificateur (63) dont l'entrée est reliée à la sortie d'un second circuit sommateur/inverseur (61) recevant les courants relatifs à chacun des signaux issus respectivement des circuits récepteurs propres aux condensateurs de lecture.

## Claims

1. A recorder/reader of magnetic tape including at least one magnetic head (20-27) rotated at the periphery of an equatorial slot (4) through a cylindrical drum (1) over which surface a helically wound tape (7) is caused to run and a rotary electric coupling device, said device being intended to transmit electrical signals representative of recorded information and/or information read from the tape (7) between a rotor-forming rotating portion (29-32) connected to the head and a stator-forming stationary portion (42-45), connected to electronic means respectively for emitting (28) and/or receiving (46) said information, wherein the device comprises, for each head (20-27), a capacitor (29) comprising only two cylindrical and concentric conducting plates (50, 51) disposed facing each other and fixed respectively to the rotor and to the stator.

2. A recorder/reader of magnetic tape according to claim 1, wherein each capacitor plate (50, 51) is fixed to a support-forming body (55, 56) which is generally annular in shape and made of insulating material.

3. A recorder/reader of magnetic tape according to claim 2, wherein the capacitor plates (50, 51) are disposed on the support bodies (55, 56) by metallization.

4. A recorder/reader of magnetic tape according to claim 2, wherein the bodies (55, 56) are generally U-shaped in section, with coplanar bases (57, 58) extending transversely to the rotor, and with the conducting capacitor plates (50, 51) being applied to the respective outside faces of the facing flanges of said bodies (55, 56).

5. A recorder/reader of magnetic tape according to claim 2 or 3, wherein the height of each capacitor plate (50, 51) is less than the height of the corresponding body (55, 56).

6. A recorder/reader of magnetic tape according to one of the previous claims, wherein one of the plates of each capacitor is connected to a receiver circuit (54) comprising a high input impedance component such as a field effect transistor (TEC 1).

7. A recorder/reader of magnetic tape according to claim 6, wherein the receiver circuit (54) also has an impedance value which is high in comparison with the equivalent input capacitance of the field effect transistor (TEC 1) at low frequency.

8. A recorder/reader of magnetic tape according to claim 7, wherein the high value impedance is constituted by a plurality of impedances (82, 83, 84) made of resistor and capacitor components and disposed in an equivalent circuit of the so-called "boot-strap" type.

9. A recorder/reader of magnetic tape according to one of the previous claims comprising a series of magnetic recording heads (20, 22, 24, 26) and a series of magnetic reading heads (21, 23, 25, 27), wherein each head corresponds to a respective record (29, 30 ,31, 32) and read (42, 43, 44, 45) coupling capacitor.

10. A recorder/reader of magnetic tape according to claim 9, wherein some of the moving capacitors plates (50) are connected to circuits (53) mounted on the rotor, and wherein some of the moving capacitor plates (50 bis) are connected to circuits (38) mounted on the rotating portion carrying the heads.

11. A recorder/reader of magnetic tape according to claims 2, 6 and 10, wherein the circuit (53) mounted on the rotor is constituted by a receiver circuit mounted on the top face of the generally annular body (55) which supports the rotating portion of the capacitor (29).

12. A recorder/reader of magnetic tape according to claim 9, wherein each coupling capacitor is provided with two metal shielding rings (57, 58) which are generally L-shaped in section and each having a base extending transversely to the rotor and respectively fixed to the bases of the rotating and the stationary portions of the capacitor.

13. A recorder/reader of magnetic tape according to claims 2 and 12, wherein each of the shielding rings (57, 58) is provided with a lip pressed against the face of each body (55, 56) carrying the corresponding capacitor plate (50, 51).

14. A recorder/reader of magnetic tape according to one of the previous claims, wherein one of the plates is connected to an emitter circuit including a low output impedance component such as a transistor.

15. A recorder/reader of magnetic tape according to claims 6 and 10, wherein the receiver circuits connected to the respective moving plates (53a, 53b, 53c, 53d) and the amplifier circuits (38, 39, 40, 41) disposed on the rotating portion carrying the heads, are constituted by surface mounting technology.

16. A recorder/reader of magnetic tape according to one of the previous claims, including electrical ground return means for the rotating portion, said means including additional rotating coupling means (64) and means suitable for delivering a current to the terminals of said additional coupling means which is opposite in sign to the current passing through each of the coupling capacitors transmitting information signals.

17. A recorder/reader of magnetic tape according to claims 9 and 16, wherein the ground return means comprise an additional rotating capacitor (64) having one plate connected to the output of a first amplifier (62) whose input is connected to the output of a first summing and inverting circuit (60) receiving currents relating to each of the signals from respective ones of the emitter circuits (52 a, b, c, d) belonging to the recording capacitors, and with the other plate of said additional capacitor being connected to the output of a second amplifier (63) whose input is connected to the output of a second summing and inverting circuit (61) receiving currents relative to each of the signals from respective receiver circuits belonging to the reading capacitors.

## Patentansprüche

1. Magnetisches Bandaufzeichnungs-/Bandlesegerät, mit wenigstens einem Magnetkopf (20-27), der zu einer Drehbewegung längs des Umfangs eines äquatorialen Schlitzes (4) einer zylindrischen Trommel (1) angetrieben wird, auf deren Oberfläche sich ein schraubenlinienförmig gewundenes Band (7) vorbeibewegt, und einer Vorrichtung zur elektrischen Drehkopplung, die dazu bestimmt ist, elektrische Signale, die auf das Band (7) aufgezeichnete und/oder vom Band (7) gelesene Information darstellen, zwischen einem rotierenden Teil (29-32), der mit dem den Rotor bildenden Kopf verbunden ist, und einem den Stator bildenden festen Teil (42-45), der mit elektronischen Mitteln zum Senden (28) und/oder zum Empfangen (46) dieser Informationen verbunden ist, zu übertragen, dadurch gekennzeichnet, daß es für jeden Kopf (20-27) einen Kondensator (29) enthält, der nur zwei zylindrische und konzentrische leitende Belegungen (50, 51) enthält, die einander gegenüber angeordnet und mit dem Rotor bzw. dem Stator verbunden sind.

2. Magnetisches Bandaufzeichnungs-/Bandlesegerät nach Anspruch 1, dadurch gekennzeichnet, daß jede Belegung (50, 51) mit einem Körper (55, 56) aus Isoliermaterial verbunden ist, der einen Träger mit im allgemeinen ringförmiger Form bildet.

3. Magnetisches Bandaufzeichnungs-/Bandlesegerät nach Anspruch 2, dadurch gekennzeichnet, daß die Belegungen (50, 51) auf dem Trägerkörper (55, 56) durch Metallisierung aufgebracht sind.

4. Magnetisches Bandaufzeichnungs-/Bandlesegerät nach Anspruch 2, dadurch gekennzeichnet, daß die Körper (55, 56) einen Abschnitt mit allgemeiner Form eines U's aufweisen, dessen Grundflächen (57, 58) zum Rotor koplanar und transversal sind, wobei die leitenden Belegungen (50, 51) an die jeweiligen Außenflächen gegenüber den Körpern (55, 56) angefügt sind.

5. Magnetisches Bandaufzeichnungs-/Bandlesegerät nach Anspruch 2 oder 3, dadurch gekennzeichnet, daß die Höhe der Belegungen (50, 51) kleiner als die Höhe der Körper (55, 56) ist.

6. Magnetisches Bandaufzeichnungs-/Bandlesegerät nach einem der vorangehenden Ansprüche, dadurch gekennzeichnet, daB eine der Belegungen jedes Kondensators mit einer Empfängerschaltung (54) verbunden ist, die ein Element mit groBer Eingangsimpedanz wie etwa einen Feldeffekttransistor (TEC1) enthält.

7. Magnetisches Bandaufzeichnungs-/Bandlesegerät nach Anspruch 6, dadurch gekennzeichnet, daB die Empfängerschaltung (54) außerdem eine Impedanz besitzt, deren Wert im Vergleich zur äquivalenten Eingangskapazität des Feldeffekttransistors (TEC1) bei niedriger Frequenz hoch ist.

8. Magnetisches Bandaufzeichnungs-/Bandlesegerät nach Anspruch 7, dadurch gekennzeichnet, daB die Impedanz mit hohem Wert durch mehrere Impedanzen (82, 83, 84) gebildet ist, die aus mehreren resistiven und kapazitiven Elementen zusammengesetzt sind und in einer Ersatzschaltung des sogenannten "boot-strap"-Typs angeordnet sind.

9. Magnetisches Bandaufzeichnungs-/Bandlesegerät nach einem der vorangehenden Ansprüche, mit einer Serie von magnetischen Köpfen (20, 22, 24, 26) zum Aufzeichnen und einer Serie von magnetischen Köpfen (21, 23, 25, 27) zum Lesen, dadurch gekennzeichnet, daß jedem Kopf ein Kondensator mit Aufzeichnungskopplung (29, 30, 31, 32) bzw. Lesekopplung (42, 43, 44, 45) entspricht.

10. Magnetisches Bandaufzeichnungs-/Bandlesegerät nach Anspruch 9, dadurch gekennzeichnet, daß bestimmte der beweglichen Belegungen (50) mit am Rotor angebrachten Schaltungen (53) verbunden sind und daß bestimmte der beweglichen Belegungen (50bis) mit an der Kopfträgerplatte angebrachten Schaltungen (38) verbunden sind.

11. Magnetisches Bandaufzeichnungs-/Bandlesegerät nach den Ansprüchen 2, 6 und 10, dadurch gekennzeichnet, daß die am Rotor angebrachte Schaltung (53) eine Empfängerschaltung ist, die an der oberen Fläche des den drehenden Teil des Kondensators (29) tragenden ringförmigen Körpers (55) angebracht ist.

12. Magnetisches Bandaufzeichnungs-/Bandlesegerät nach Anspruch 9, dadurch gekennzeichnet, daß es für jeden Kopplungskondensator mit zwei metallischen Abschirmungsringen (57, 58) versehen ist, deren Querschnitt die allgemeine Form eines L's besitzt und wovon die einzelnen Grundflächen transversal zum Rotor angeordnet und an die Grundflächen des drehenden Teils bzw. des festen Teils des Kondensators angefügt sind.

13. Magnetisches Bandaufzeichnungs-/Bandlesegerät nach den Ansprüchen 2 und 12, dadurch gekennzeichnet, daß die Abschirmungsringe (57, 58) jeweils mit einem Rücksprung versehen sind, der an die Fläche eines jeden die entsprechende Belegung (50, 51) tragenden Körpers (55, 56) angefügt ist.

14. Magnetisches Bandaufzeichnungs-/Bandlesegerät nach einem der vorangehenden Anspriiche, dadurch gekennzeichnet, daß die Sendebelegung mit einer Sendeschaltung verbunden ist, die ein Element mit schwacher Ausgangsimpedanz wie etwa einen Transistor enthält.

15. Magnetisches Bandaufzeichnungs-/Bandlesegerät nach den Ansprüchen 6 und 10, dadurch gekennzeichnet, daß die mit den jeweiligen beweglichen Belegungen verbundenen Empfängerschaltungen (53a, 53b, 53c, 53d) sowie die auf der Platte (5) angeordneten Verstärkerschaltungen (38, 39, 40, 41) mittels der Oberflächenmontagetechnik verwirklicht sind.

16. Magnetisches Bandaufzeichnungs-/Bandlesegerät nach einem der vorangehenden Ansprüche, dadurch gekennzeichnet, daß es Mittel zur Masserückleitung des drehenden Teils aufweist, die zusätzliche drehende Kopplungsmittel (64) sowie Mittel enthält, die an die Anschlüsse der zusätzlichen Kopplungsmittel einen Strom liefern, der zu demjenigen entgegengesetzt ist, der durch die einzelnen Kopplungskondensatoren fließt, welche die Informationssignale übertragen.

17. Magnetisches Bandaufzeichnungs-/Bandlesegerät nach den Ansprüchen 9 und 16, dadurch gekennzeichnet, daß die Mittel zur Masserückleitung einen zusätzlichen drehenden Kondensator (64) enthalten, wovon eine Belegung mit dem Ausgang eines ersten Verstärkers (62) verbunden ist, dessen Eingang mit dem Ausgang einer ersten Summierer-/Invertiererschaltung (60) verbunden ist, die ihrerseits die Ströme empfängt, die den Signalen entsprechen, die von den jeweiligen den Aufzeichnungskondensatoren zugehörigen Sendeschaltungen (52a, b, c, d) ausgegeben werden, während die andere Belegung des zusätzlichen Kondensators mit dem Ausgang eines zweiten Verstärkers (63) verbunden ist, dessen Eingang mit dem Ausgang einer zweiten Summierer-/Invertiererschaltung (61) verbunden ist, die ihrerseits die Ströme empfängt, die den Signalen entsprechen, die von den jeweiligen den Lesekondensatoren zugehörigen Empfängerschaltungen ausgegeben werden.
